# EUROPEAN PATENT APPLICATION

(11) **EP 0 872 504 A1**
(43) Date of publication of application: **21.10.1998**
(21) Application number: 95927972.0
(22) Date of filing: 04.08.1995
(51) Int. Cl.: C08G 59/50, C08G 59/40, C08L 63/00, C08K 5/37

(54) **CURABLE EPOXY RESIN COMPOSITION WHICH GIVES FLEXIBLE CURED ARTICLE**

(71) Applicant: ASAHI DENKA KOGYO KABUSHIKI KAISHA, Arakawa-ku Tokyo 116 (JP); CECA S.A., 92800 Puteaux (FR)
(72) Inventor: HIOKI, Akira Asahi Denka Kogyo Kabushiki Kaisha, Tokyo 116 (JP); MORIO, Kazuhiko Asahi Denka Kogyo Kabushiki Kaisha, Tokyo 116 (JP); KAWAMURA, Tetsuhi, Tokyo 164 (JP)
(74) Representative: Haicour, Philippe
(86) International application number: JP9501556
(87) International publication number: WO9706198

(57) **Abstract**

A curable epoxy resin composition for producing hardened product having flexibility,.comprising (a) epoxy resin (A), (b) monothiol compound (B) having one mercapto group, (c) curing agent (C) for the epoxy resin, selected from the group consisting of of amine compound (C-1) and its denatured products (C-2) and polythiol compound (C-3), and optionally (d) catalyst (D) for accelerating a reaction between epoxy group and mercapto group, which is used optionally when the amine compound (C-1) or its denatured products (C-2) is not used as the curing agent (C).

## Description

### Field of Invention

This invention relates to a curable epoxy resin composition possessing low viscosity but high curing rate to produce a hardened product having desired flexibility.

### Background of the Invention

Epoxy resin is widely used in paint, adhesive, electrical parts, civil engineering and construction. However, cured products obtained by curing typical bisphenol A type epoxy resins with polyamine show poor flexibility. Even if they possess some flexibility at ambient temperature, such flexibility is lost at lower temperatures, so that the products become.rigid and fragile.

In order to improve flexibility of epoxy resin, many studies have been made in epoxy resin itself, curing agent and additives and some of them are used in actual uses.

As epoxy resins improved in flexibility, a variety of resins including glycidyl esters of dimer acids, epoxy resin having bisphenol branches, glycidyl ethers of long linear polyol and epoxy resins denatured with synthetic rubber, urethane and polysulfide are developed but each has some shortages. For example, glycidyl esters of dimer acids is poor in alkali-resistance and epoxy resin having bisphenol branches lose flexibility after it is exposed outdoor at low temperatures for long time. Glycidyl ethers of long linear polyol is not satisfactory in curing property and cured products show poor resistance to water. Epoxy resins denatured with synthetic rubber or urethane lose flexibility at low temperatures so that the peel strength drop sharply.

As curing agents to improve the flexibility, it is developed polyaminepolyaminde, prepolymer having block isocyanate terminals and polyoxyalkylene-diamine and triamine. It is true that the flexibility is improved to some extent by these curing agents. However, the viscosity of mixture at usage can not be decreased to a desired value and flexibility obtained is moderate.

Additives to improve the flexibility are also developed and include nylon, polyvinylacetal, polyisobutene, 1, 4-cis-polybutadiene, synthetic rubber such as nitrile rubber and chlorprene rubber, poly(ethylvinyl ether), copolymer of hydrolyzed ethylene vinyl ester, ethylene-vinyl acetate copolymer, ethylene-vinyl acetate-maleic anhydride terpolymer and denatured silicon resins. Although the flexibility is improved to some extent by these additives, usage of these high polymers make it difficult to produce a uniform mixture with epoxy resin and increase the viscosity of epoxy resin resulting in trouble of handling in actual uses.

An object of the present invention is to provide a curable epoxy resin composition having low viscosity but high curing rate and which can produce a cured product having desired flexibility.

### Disclosure of the Invention

The present invention provides a curable epoxy resin composition comprising
a) epoxy resin (A),
b) monothiol compound (B) having one mercapto group,
c) curing agent (C) for the epoxy resin, selected from the group consisting of of amine compound (C-1) and its denatured products (C-2) and polythiol compound (C-3), and optionally
d) catalyst (D) for accelerating a reaction between epoxy group and mercapto group, which is used optionally when the amine compound (C-1) or its denatured products (C-2) is not used as the curing agent (C).

### The best mode of the Invention

Epoxy resin (A) may be known epoxy resins used in pains, adhesive and sealant and possess, in its molecule, more than one (in average) substituted or unsubstituted glycidyl group represented by the general formula: 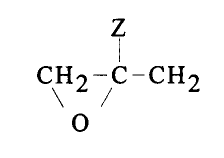 in which Z is hydrogen atom or alkyl group such as methyl and ethyl.

Examples of the epoxy resin (A) are epoxy resins having more than one glycidyl ether, glycidyl ester, glycidyl amine or glycidyl imine in average in its molecule.

Epoxy resins (A-1) having more than one glycidyl ether in average in its molecule may be following resins:
(A-1-1) polyglycidyl ethers of polyalcohol such as ethylene glycol, propylene glycol, butane diol, glycerol and trimethylol propane.
(A- 1-2) polyglycidyl ethers of monocyclo-polyphenols such as resorcinol, hydroquinone, pyrocatechol, phloroglycinol, 1, 5-dihydroxy naphtharene, 2, 7-dihydroxy naphtharene and 2, 6-dihydroxy naphtharene.
(A-1-3) polyglycidyl ethers of polycyclo-diphenols including bis-(hydroxyphenyl) alkanes such as 2, 2-bis(4-hydroxyphenyl)-propane, 2, 4'-dihydroxydiphenyl methane, bis-(2-hydroxyphenyl)-methane, bis-(4-hydroxyphenyl)-methane, bis-(4-hydroxy-2, 6-dimethyl-3-methoxyphenyl)-methane, 1, 1-bis-(4-hydroxyphenyl)-ethane, 1, 2-bis-(4-hydroxyphenyl)-ethane, 1, 1-bis-(4-hydroxy-2-chlorophenyl)-ethane, 1, 1-bis-(3, 5-dimethyl-4-hydroxyphenyl)-ethane, 1, 3-bis-(3-methyl-4-hydroxyphenyl)-propane, 2, 2-bis-(3, 5-dichloro-4-hydroxy phenyl)-propane, 2, 2-bis-(3-phenyl-4-hydroxyphenyl)-propane, 2, 2-bis-(3-isopropyl-4-hydroxyphenyl)-propane, 2, 2-bis-(2-isopropyl-4-hydroxy phenyl)-propane, 2, 2-bis-(4-hydroxynaphthyl)-propane, 2, 2-bis-(4-hydroxyphenyl)-pentane, 3, 3-bis-(4-hydroxyphenyl)-pentane, 2, 2-bis-(4-hydroxyphenyl)-heptane, bis-(4-hydroxyphenyl)-methane, 1, 2-bis-(4-hydroxyphenyl)-1, 2-bis-(phenyl)-propane and 2, 2-bis-(4-hydroxyphenyl)-1-(phenyl)-propane; dihydroxyphenyl biphenyls such as 4, 4'-dihydroxybiphenyl and 2, 2'-dihydroxy biphenyl, 2, 4'-dihydroxy biphenyl; di-(hydroxyphenyl) sulfones such as bis-(4-hydroxyphenyl) , 2, 4'-dihydroxydiphenyl sulfone, chloro-2, 4-dihydroxydiphenyl sulfone, 5-chloro-2, 4-dihydroxydiphenyl sulfone, 5-chloro-4, 4'-dihydroxydiphenyl sulfone and 3'-chloro-4, 4'-dihydroxydiphenyl sulfone; di-(hydroxyphenyl) ethers such as bis-(4-hydroxyphenyl) ether, 4, 3- (or 4, 2'- or 2, 2'-) dihydroxydiphenyl ether, 4, 4'-dihydroxy-2, 6-dimethyldiphenyl ether, bis-(4-hydroxy-3-iso-propylphenyl) ether, bis-(4-hydroxy-3-chlorophenyl) ether, bis-(4-hydroxy-3-fluorophenyl) ether, bis-(4-hydroxy-3-bromophenyl) ether, bis-(4-hydroxynaphthyl) ether, bis-(4-hydroxy-3-chloro naphthyl) ether, bis-(2-hydroxybiphenyl) ether, 4, 4'-dihydroxy-2, 6-dimethoxydipheny ether and 4, 4'-dihydroxy-2, 5-diethoxydipheny ether; 1, 1-bis-(4-hydroxypheny)-2-phenyl ethane; 1, 3, 3-trimethyl-1-(4-hydroxypheny)-6-hydroxy indane and 2, 6-bis-(4-hydroxypheny)-4-methyl pentane,
(A-1-4) other polyglycidyl ethers of polycyclo-diphenols including 1, 4-bis-(4-hydroxybenzyl)-benzene, 1, 4-bis-(4-hydroxybenzyl) -tetramethylbenzene, 1, 4-bis-(4-hydroxybenzyl)-tetraethyl benzene and 1, 4-bis-(4-hydroxychlomyl)-tetraethylbenzene,
(A-1-5) polyglycidyl ethers of polycyclo-polyphenols including precondensates between phenols and carbonyl compounds such as precondensate of phenol resin, phenol-acrolein polycondensation reaction product, phenol-glyoxal polycondensation reaction product, phenol-pentane diallyl polycondensation reaction product, resorcinol-acetone polycondensation reaction product and xylene-phenol-formalin polycondensation reaction product and precondensates between phenols and polychlroromethylated aromatic compounds, and
(A-1-6) polyglycidyl ethers obtained by adding alkylene oxide such as ethylene oxide, propylene oxide an butyl oxide to the above-mentioned polyalcohols, monocyclo-polyphenols, polycyclo-diphenols or polycyclo-polyphenols and then by changing hydoxyl groups to glycidyl ether groups.

Epoxy resins (A-2) having more than one glycidyl ester in average in its molecule may be homopolymer and coploymers of polyglycidyl esters of aliphatic polycarboxylic acids and aromatic carboxylic acids or of acrylic acids.

Epoxy resins (A-3) having more than one glycidyl amine or glycidyl imine in average in its molecule may be polyglycidyl compounds obtained by changing amine groups in precondensates of aniline or aromatic amine having alkyl substitute on benzene ring or in precondensates of aromatic aniline, aldehyde and phenol to glycidyl amino group or glycidyl imido group.

Among these epoxy resins, preferred ones are polyglycidyl ethers of polycyclo-diphenols (A-1-3) and polyglycidyl ethers obtained by adding alkylene oxide such as ethylene oxide, propylene oxide an butyl oxide to polycyclo-diphenol for example and then by changing hydoxyl groups to glycidyl ether groups (A-1-6), and more preferable epoxy resin is polyglycidyl ether of bis-(hydroxyphenyl)-alkane mentioned in the polyglycidyl ethers of polycyclo-diphenols (A-1-3).

The epoxy resin is use alone or in combination of more than two epoxy resins, or can be combined with other compatible resin(s) such as denatured epoxy resins denatured with synthetic rubber, urethane, polysulfide or phosphoric acid or having chelating groups; thermosetting resins such as unsaturated polyester, phenoxy resins, phenol resin and xylene resin; ethylene-vinyl acetate copolymer; thiocol resin; coal-oil resins; denatured butadine-acrylonitrile resin and vinyl acetate resin.

The monothiol compound (B) having one mercapto group may be aliphatic, cycloaliphatic, aromatic, heterocyclic compounds and high polymers having one mercapto group (-SH).

Followings are preferred monothiol compounds (B):
(B-1) ester between organic carboxylic acid (B-1-1) having one mercapto group and monohydroxyl compound (B-1-2). The organic carboxylic acid (B-1-1) may be mercapto acetic acid, β-mercapto propionic acid, o-mercapto benzoic acid and thioglycolic acid and the monohydroxyl compound (B-1-2) may be methyl alcohol, ethyl alcohol, propyl alcohol, 2-ethylhexyl alcohol and methoxybutyl alcohol.
(B-2) ester between hydroxyl compound (B-2-1) having one mercapto group and monocarboxylic acid (B-2-2). The hydroxyl compound (B-2-1) may be 2-mercaptoethanol, 1-mercapto-2-propanol, 2-mercaptoisopropanol, 3-mercapto propanol, 4-mercaptobutanol, 3-mercapto-1, 2-propanediol, 1-phenyl-2-mercaptoethanol, o-mercaptophenol and the monocarboxylic acid (B-2-2) may be aliphatic monocarboxylic acids such as acetic acid, propionic acid, (meth)acrylic acid, stealic acid, oleic acid, lauric acid, myristic acid and palmitic acid and aliphatic monocarboxylic acids such as benzoic acid, phenyl acetic acid and cinnamic acid.
(B-3) monothiol compound obtained by a reaction between monoepoxy compound (B-3-1) and hydrogen sulfide or dimercaptan (B-3-2). The monoepoxy compound (B-3-1) may be olefin oxide, glycidylmethacrylate, octylene oxide, allylglycidyl ether, butylglycidyl ether, cyclohexene vinyl monoxide, styrene oxide, phenylglycidyl ether, dipentene mono oxide, p-butylphenolglycidyl ether, α-pinene oxide, cresylglycidyl ether, glycidyl ester of t-carboxylic acid, 3-(pentadecyl)-phenylglycidyl ether and the dimercaptan (B-3-2) may be polythiol compounds (C-3) which will be mentioned hereinafter as the curing agent (C).
(B-4) monothiol compound obtained by reacting monohydroxyl compound (B-4-1) with epichlorohydrin (B-4-2) followed by a reaction with hydrogen sulfide. The monohydroxyl compound (B-4-1) may be aliphatic monohydroxy compounds such as n-propyl, n-butyl, iso-butyl, s-butyl and t-butyl alcohol, 3-methyl-3-methoxy-1-butanol, higher alcohols, ethyleneglycol monophenyl ether; aromatic monohydroxy compounds such as phenol, cresol, nonylphenol, p-t-butylphenol, p-octylphenol, isopropenylphenol, p-(α-cumyl)phenol, phenoxy ethanol and tribenzylphenol; other monohydroxy compounds such as tetrahydrofurfuryl alcohol, (hydroxy)ethylpiperazine, pyridine methanol and furfuryl alcohol; addition products obtained by adding alkylene oxide such as ethylene oxide and propylene oxide to the above-mentioned monohydroxy compounds and partial esters of polyhydroxyl compound and organic carboxylic acid having one OH group which will be mentioned hereinafter.
(B-5) monothiol compounds represented by the general formula: R-SH (in which R is substituted or unsubstituted alkyl, alkenyl, cycloalkyl or aryl group) such as alkylmercaptans including ethylmercaptan, propylmercaptan, isopropylmercaptan, butylmercaptan, t-butylmercaptan, hexylmercaptan, octyl mercaptan, t-nonylmercaptan, dodecylmercaptan, t-dodecyl mercaptan, hexadecylmercaptan and octadecylmercaptan; cycloalkylmercaptan such as cyclohexylmercaptan and aryl mercaptans such as benzylmercaptan, 4-chlorobenzyl mercaptan, dodecylbenzylmercaptan, α-mercaptotoluene and 3-mercapto-diphenyl methane.

The composition according to the present invention can contains diluent for epoxy resin. The diluent may be reactive diluents including monoepoxy compound such as olefin oxide, glycidylmethacrylate, octylene oxide, olefin oxide, glycidylmethacrylate, octylene oxide, allylglycidyl ether, butylglycidyl ether, 2-ethylhexylglycidyl ether, vinylcyclohexene monoxide, styrene oxide, phenylglycidyl ether, p-sec-butylphenolglycidyl ether, cresylglycidyl ether and α-pinene oxide; and di- or polyepoxy compounds such as butadiene oxide, dimethyl pentane oxide, diglycidyl ether, butanediolglycidyl ether, ethyleneglycol didlycidyl ether, di- or poly-ethylene glycol diglycidyl ether, propyleneglycidyl ether, di- or poly-propyleneglycoldiglycidyl ether, vinyl cyclohexene dioxide, neopentylglycoldigrycidyl ether, diglycidyl aniline, trimethylolpropanetriglycidyl diether, glycerine triglycidyl ether, limonene dioxide, resorcine diglycidyl ether, 2, 6-diglycidyl phenylglycidyl ether, 2, 4-diglycidylphenylglycidyl ether and 2-diglycidylphenylglycidyl ether, and non-reactive diluents such as dibutylphthalate, glycol ether-ester, styrene and phenols.

The curing agent (C) for epoxy resin is selected from the group consisting of of amine compound (C-1) and its denatured products (C-2) and polythiol compound (C-3).

The amine compound (C-1) may be aliphatic diamines such as ethylene diamine, trimethylene diamine, tetramethylene diamine, hexamethylene diamine, octamethylene diamine, nonamethylene diamine, decamethylene diamine, undeca diamine, 2-methyl-2, 4-diaminopentane and H₂N(CH₂)ₙ-CH(CH₃)NH₂ (n = an integer of 1 to 8); alkylene polyamines such as diethylene triamine, triethylene tritetramine, tetraethylene pentamine, hexametylene heptamine, di(hexamethyl) triamine, tri(hexamethylene) tetramine, tetra(hexamethylene) pentamine, tripropylene tetramine, tertapropylene pentamine, iminobispropyl amine, methyliminobispropyl amine, tetra(aminomethyl)methane, tetrakis(2-aminoethylaminomethyl) methane, triethylene-bis(trimethylene)hexamine; aliphatic diamines having aromatic ring structure such as 1, 3-diaminomethylnaphthalene, 1, 4-diaminomethylnaphthalene, 4, 4'-diaminomethylbiphenyl and o-, m- or p-xylylenediamine (ω, ω'-diaminoxylene); aliphatic diamines having cycloaliphatic structure such as 1, 3-diaminocyclopentane, 1, 4-diaminocyclohexane, 1-cyclohexylamino-3-aminopropane, 1, 3-aminocyclohexane, 1, 2-diaminocyclohexane, 1-amino-3-3-aminomethyl-3, 5, 5-trimethylcyclohexane(isophoronediamine), 1, 8-diamino-8-methane, bis-(4-aminocyclohexyl) methane, di(amino cyclohexyl) sulfone, 2, 2'-bis-(4-aminocyclohexyl) propane, 1, 3-di-(amniocyclohexyl) propane, 1, 3-bis-(aminomethyl)cyclohexane, 1, 2-bis-(aminomethyl)cyclohexane, 4-isopropyl-1, 2-diaminocyclohexane, 2, 4-diaminocyclohexane, N, N'-diethyl-1, 4-diaminocyclohexane, 3, 3'-dimethyl-4, 4'-diaminodicyclohexyl methane and 3-aminomethyl-3, 3, 5-trimethylcyclohexyl methane; aliphatic amines having heterocycloaliphatic structure such as N-aminoethyl peperazine, 1, 4-bis-(3-aminopropyl) piperazine and 3, 9-bis-(3-aminopropyl)-2, 4, 8, 10-tetraoxaspiro [5, 5] undecane; and aromatic amines such as metaphenylene diamine, o-phenylene diamine, 2, 4-toluene diasnine, 4-chloro-o-phenylene diamine, metaamninobenzyl amine, 4-methoxy-6-methyl-metaphenylene diamine, benzidine, 4, 4'-diaminodiphenyl methane, 2, 4, 6-tri(dimethylaminomethyl) phenol, 2, 2-bis(4-aminophenyl) propane, 4, 4'-diaminodiphenyl ether, 4, 4'-diaminodiphenyl sulfone, bis(3, 4-diaminophenyl) sulfone, diamino trisulfone, 4, 4'-diaminobenzophenone, 2, 2'-dimethyl-4, 4'-diaminodiphenyl methane, 2, 4'-diaminodiphenyl, 3, 3'-dimethyl-4, 4'-diaminobiphenyl and 3, 3'-dimethoxy-4, 4'-diaminobiphenyl.

As the amine compound (C-1), following compound also can be used:
- 3, 9-bis(3-aminopropyl)-2, 4, 8, 10-tetraspiro [5, 5] undecane (ATU). ATU is a diamine (m p = 47 to 48 °C, activated hydrogen equivalent = 68.6) having spiro rings in it molecule and represented by following structure: 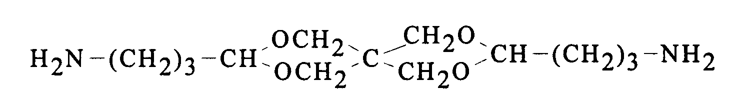 Available on market (trade name : EPOMATE) in a form of denatured liquid curing agent,
- derivatives of ATU, epoxy addition compounds and acrylonitrile addition products,
- diamine having a hydantoin ring represented by following structure: 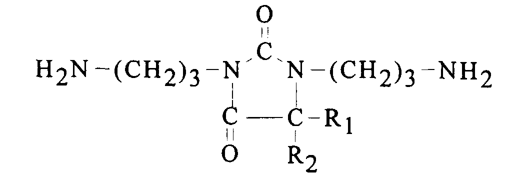 in which R₁, R₂ are hydrogen atom or lower alkyl.
- di- or tri-amine having ether bond in its main chain, including following diamine of polyoxypropylene chain: 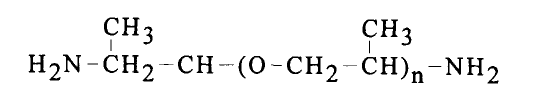 available on market as polyether diamine D-230, D-400, D-200 from Mitsui-Texaco Co., Ltd. (number of D corresponds to molecular number), available on market as polyether diamine D-230, D-400, D-200 from Mitsui-Texaco Co., Ltd., and triamine: 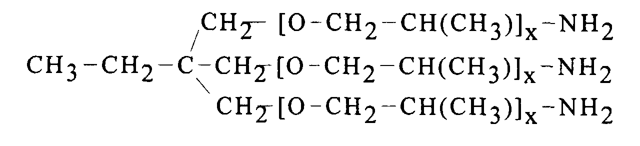 available on market as T-403, and the other diamines of polyoxyethylene chain :ED-600, ED-900, ED-2,000,
- potential curing agents such as dicyandiamide, guanidine, carbonate hydrazido, imidazole and its derivatives.

The denatured products (C-2) can be prepared by denaturing the above-mentioned amines by following techniques:
1) Mannich reaction with phenols and carbonyl compound,
2) addition reaction with epoxy compound,
3) Michael addition reaction with substituted or unsubstituted acryl compound,
4) polyamidation with polycarboxylic acid, and
5) ketimination with ketone compound.

A mixture of denatured products also can be used

Phenols used in Mannich reaction 1) are typically phenol, alkyl-substituted phenol, cresol, halogenated phenol, anisole, bisphenol-A, bisphenol-F and their mixtures and carbonyl compounds used in Mannich reaction are typically formaldehyde, paraformaldehyde, acetoaldehyde, bensaldehyde, acetone and their mixtures but other phenols and carbonyl compounds also can be used.

Epoxy compound used in the denaturing method 2) may be those mentioned in the epoxy resin (A) and the diluents for epoxy resins.

The substituted or unsubstituted acryl compound used in the Michael addition reaction 3) is typically (meth)acrylic acid, acrylonitrile, acrylamide and (meth)acrylates but other compounds also can be used.

Polycarboxylic acid used in polyamidation 4) may be but not exclusive to monomer acids, dimer acids, trimer acids, tall oil aliphatic acids, phthalic acid and maleic acid.

The polythiol compound (C-3) as curing agent (C) is those having at least two mercapto (-SH) groups and is preferably selected from following groups:
(C-3-1) ester between organic carboxylic acid (C-3-1-1) having at least one mercapto group and polyhydroxyl compound (C-3-1-2). The carboxylic acid (C-3-1-1) may be those having one mercapto group such as mentioned in (B-1-1) and those having two mercapto groups such as dimercapto aliphatic carboxylic acids. The polyhydroxyl compound (C-3-1-2) may be ethyleneglycol, diethyleneglycol, poly(oxyethylene)glycol, propyleneglycol, poly(oxypropylene)glycol, polyoxyethylene-polyoxypropylene glycol, propane-1, 3-diol, butane-1, 4-diol, polyoxybutylene glycol, pentane-1, 5-diol, hexane-1, 6-diol, hexane-2, 4, 6-triol, hexane-1, 2, 6-triol, hexane-1, 2, 5-triol, glycerol, 1, 1, 1-trimethylolpropane, pentaerythritol, poly(epichlorohydrin), Sorbit, Mannit, polyoxyalkylenepolyols obtained by adding alkyleneoxide such as ethylene oxide and.or propylene oxide to above-mentioned alcohols.
(C-3-2) ester between hydroxyl compound (C-3-2-1) having more than one mercapto group and polycarboxylic acid (C-3-2-2). The hydroxyl compound (C-3-2-1) may be those having one mercapto group such as mentioned in (B-2-1) and those having more than one mercapto groups and the polycarboxylic acid (C-3-2-2) may be maleic acid, malonic acid, succinic acid, adipic acid, methyl succinic acid, butane-1, 2, 3-tricarboxylic acid, butane tetracarboxylic acid, fumaric acid, itaconic acid, alkenyl-substituted succinic acid, maleic fatty acid, isophthalic acid, terephthalic acid, trimellitic acid and benzene tricarboxylic acid.
(C-3-3) polythiol compound obtained by a reaction between polyepoxy compound (C-3-3-1) and hydrogen sulfide or polythiol (C-3-3-2). The polyepoxy compound (C-3-3-1) may be polyepoxy compounds mentioned in the epoxy resin and in diluents for epoxy resins which will be explained later and the polythiol (C-3-3-2) may be any one which is mentioned in this specification.
(C-3-4) polyothiol compound obtained by a reaction between polyhydroxyl compound (C-3-4-1) and epichlorohydrin. The polyhydroxyl compound (C-3-4-1) may be those mentioned in (C-3-1-2).
(C-3-5) other polythiol compounds including dithioterephthalic acid, 2, 2'-dimercarptodiethyl ether, liquid polysulfone resins, polyoxy alkylenepolyols and polythiol compounds obtained by a reaction between bis(dichloroethyl)formal.

The catalyst (D) for accelerating a reaction between epoxy group and mercapto group is not indispensable when amine compound (C-1) is used as the curing agent (B) for epoxy but is indispensable when polythiol compound (C-3) is used as the curing agent (B) for epoxy.

The catalyst (D) may be, in addition to amine compounds used as the curing agent (C) for epoxy resin, amine compounds including di-n-butylamine, N-methylcyclohexylamine, piperidine, α-picoline, dimethylamino methylphenol, dimethylamino-p-cresol, N, N'-dimethyl ethylenediamine, bis(4-methylaminocyclohexyl)methane, piperazine, trimethylamine, tripropylamine, dimethylbutylamine, dimethylpentyl amine, dimethylcyclohexylamine, tri-n-butylamine, tricyclohexylamine, triethanol amine, dimethylbonzylamine, pyridine, N, N, N', N'-tetrakis(2-cyanoethyl)ethylenediamine, bis(4-dimethylaminocyclohexyl) methane, 2-(dimethylaminomethyl)phenol, 2, 4, 6-tris(dimethylamino methyl) phenol, N, N-dimethylpropane-1, 3-diamine, 4-aminopyridine, 2-methylimidazole, 2-ethyl-4-methylimidazole, 2-undecylimidazole, 2-phenylimidazole, 1-benzyl-2-methylimidazole, 1-cyanoethyl-2-methyl imidazole, 1-cyanoethyl-2-ethyl-4-methylimidazole, N-methyl piperazine, N, N, N'-trimethylethylenediamine, N-(2-aminoethyl) piperazine, N, N'-dimethylpiperazine, 1, 4-diasacyclo(2, 2, 2)octane and pyridine.

Proportion of the monothiol compound (B) in the composition can vary in a wide range and depends to required flexibility for products and is preferably selected in such a range that activated hydrogen contained in the monothiol compound (B) is 0.01 to 0.8 equivalent, preferably 0.1 to 0.5 equivalent to one epoxy group in the epoxy resin A. If this proportion becomes lower than the range, the product shows less flexibility. On the contrary, if this proportion becomes higher than the range, the product does not show desired mechanical strength.

Proportion of the curing agent (C) in the composition is preferably selected in such a range that activated hydrogen contained in the monothiol compound (B) is 0.2 to 2.0 equivalent, preferably 0.5 to 1.5 equivalent to one epoxy group in the epoxy resin A. If this proportion becomes lower than the range, curing do not proceed rapidly. On the contrary, if this proportion becomes higher than the range, the product does not show desired flexibility.

Proportion of the catalyst (D) in the composition depends to amounts of the monothiol compound (B) and/or the curing agent (D-2) for polythiol compound and is preferably selected in a range of 0.1 to 10 parts by weight, preferably 1 to 7 parts by weight with respect to 100 parts by weigh of epoxy resin.

The composition according to the present invention permits to contain absorbent or adsorbent (E) in such advantageous manner that a cured product produced from the composition reserves functions of the absorbent or adsorbent (E). In other words, the cured products made of the composition according to the present invention possess absorbing or adsorbing property.

The absorbent or adsorbent (E) may be activated carbon, activated alumina, silica gel, natural zeolites such as phillipsite, harmotome, merlinoite, gismondine, amicite , gatronite, analcime, wairakite, poulingite, laumontite, yugawaralite, chabazite, gmelinite, faujasite, erionite, offretite, levyne, mazzite, natrolite, tetranatrolite, paranatrolite, mesolite, scolesite, thomsonite, gonnardite, edingtonite, mordenite, dachardite, epistilbite, fertierite, bikitite, heulandite, clinoptilolite, stylbite, stellerite, barrerite, brewsterite, cowlesite, pollesite and ashcrofin; synthetic zeolites such as zeolite A, zeolite NA, zeolite X, zeolite Y and zeolite Q, ZSM-5, zeolite ZK 4, zeolite ZK-5, Z-14US, zeolite B, zeolite Ω, zeolite S, zeolite R, zeolite G, zeolite D, zeolite T, zeolite L, zeolite W and zeolite C; absorption polymer such as polyacrylic acid crosslinked products, hydrolysis products of starch-acrylonitrile graft copolymer neutralized products of starch-acrylonitile graft polymer saponified product of acrylate-vinyl acetate copolymer, denatured product of crosslinked polyvinyl alcohol, partly neutralized polyacrylic acid crosslinked product and crosslinked iso-butylene-maleic anhydride copolymer; and activated clay such as montmorillonite, pyrophyllite, bidellite, nontronite and saponite.

The absorbent or adsorbent (E) is preferably a substance having both of absorption powder and adsorption powder. In this sense, activated carbon and zeolite are preferable. Optionally, the absorbent or adsorbent (E) can absorb or adsorb previously any suitable component.

Proportion of the absorbent or adsorbent (E) is preferably 10 to 200 parts, preferably 20 to 100 parts by weight with respect to 100 parts by weight of said epoxy resin (A). If this proportion is not higher than the range, the cured product does not show the property of absorption or adsorption. On the contrary, higher proportion spoil the mechanical strength.

The composition according to the present invention can contain inorganic fillers usually used in paints, adhesives and sealants. The inorganic fillers may be inorganic oxides such as oxides of titanium, magnesium, zirconium and aluminium; sulfates such as barium sulfate; calcium carbonate, silica, clay and talc.

The composition according to the present invention can contain further the other additives including followings:
1) coloring pigments such as red iron oxide, chrome yellow, yellow iron oxide, titanium white, phthalocyanine Blue and phthalocyanine Green; anti-corrosive pigments such as chromic acid type, morybdic acid type, phosphoric acid type, boric acid type, ferrite type, lead oxide; flake pigments such as glass flake, stainless flake and aluminum flake,
2) fibers or filaments such as asbestos, plant fibers, glass fibers, carbon fibers and synthetic fibers;
3) anti-stain agents such as cuporous oxide, triphenyl tin hydrooxide, bis-tributyl tin-α, α'-diburomosucinate and other organic anti-stain agents,
4) chelating agents such as ethylenediamine tetraacetic acid,
5) metal powders such as powders of copper, copper alloys, zinc, aluminum and iron,
6) silane coupling agents such as γ-chloropropyltrimethoxysilane, γ-chloropropylmethyldichlorosilane, γ-chloropropylmethyldialoxy silane, vinyl triacetoxysilane, vinyl trialkoxysilane, vinyl(β-methoxy)silane, γ-methacryloxypropyltrimethoxysilane, γ-methacryloxypropylmethylalcoxysilane, γ-mercaptopropyl trimethoxysilane, β-(3, 4-epoxycyclohexyl)ethylrimethoxysilane, γ-glycidoxypropyltrimethoxysilane, γ-glycioxypropylmethyl dialcoxysilane, γ-mercaptopropyltrimethoxysilane, γ-aminopropyltrimethoxysilane, N-phenyl-γ-aminopropyl trimethoxysilane, N-β-(aminoethyl)-γ-aminopropylmethyl dimethoxysilane, γ-(polyethyleneamino)propyltrimethoxy silane, N-β-(aminoethyl)-γ-aminopropyltrimethoxysilane, γ-ureido propyltriethoxysilane, methylaminoethoxypropyldialkoxysilane and N'-vinylberzyl-N-trimethyoxypropyldiamine salts,
7) the other additives including surfactants which improve dispersion of pigments, anti-sedimentation agent, anti-sagging agent, thicking agent, anti-fungus agent, anti-mold agent, electroconductive filler, fire retardant, plasticizer and stabilizer, defoaming agent.

Amounts of these additives is limited to such levels that they do not spoil the objective property of the composition according to the present invention.

The composition according to the present invention can be prepared by usual mixing technique. For example, the absorbent or adsorbent (E) together with inorganic filler, diluent or the like is mixed firstly with epoxy resin (A) in a dispersing machine such as sand mill, three roll mill to prepare a uniform epoxy mixture (I). On the other hand, monothiol (B) and curing agent (C) for epoxy optionally together with the other additives are mixed with epoxy resin (A) to prepare a uniform curing epoxy mixture (II). These two epoxy mixtures (I) and (II) are mixed in a mixer when the composition according to the present invention is used. In a variation, a part of the absorbent or adsorbent (E), inorganic filler, diluent or the like is mixed previously with the curing epoxy mixture (II).

The composition according to the present invention can be used as sealant, coating material, casting material, molding material, dipping material and adhesives. The composition containing the absorbent or adsorbent (E) according to the present invention can be used in a variety of applications which require absorption-desorption function, deodorant function controlled releasing function and adsorption-desorption function.

How, we will explain non limitative Examples of the present invention and Comparative Examples.

### Examples 1 to 7 and Comparative Example 1

Monothiol compound, curing agent for epoxy and catalyst were mixed to prepare a curing mixture for epoxy resin which was then mixed with an epoxy resin to prepare epoxy resin compositions summarized in Table 1.

Table 1 shows proportions of epoxy resin, monothiol compound, curing agent and catalyst as well as the resulting curing rates.

Curing rate "A" in Table 1 is the gelation time of bulk sample (50 g) at ambient temperature, while curing rate "B" is the gelation time of thin film sample in GT-D gelation tester (Nitshin.Kagaku Co., Ltd) having a heating plate and a temperature controller for the heating plate. In the curing rate "B" test, about 0.2 g of uncured epoxy resin is applied on the heating plate heated at a predetermined temperature and gelation of a film of epoxy resin formed is detected by a rod having low thermal conductivity such as a wood rod to evaluate the gelation time from a time duration until gelled condition.

**Table 1**

| | | Examples | | | | | | | C |
|---|---|---|---|---|---|---|---|---|---|
| | | 1 | 2 | 3 | 4 | 5 | 6 | 7 | 1 |
| epoxy resin (1) | | 100 | 100 | 100 | 100 | 100 | 100 | 100 | 100 |
| monothiol compound (1) | | 30 | 30 | 30 | 30 | 30 | 30 | 30 | 0 |
| curing agent for epoxy (1) | | 45 | 45 | 45 | 45 | 45 | 45 | 45 | 60 |
| amine catalyst (1) | | 10 | 5 | 2 | 5 | 2 | 5 | 2 | 5 |
| absorbent or adsorbent | (1) | 0 | 0 | 0 | 45 | 45 | 0 | 0 | 0 |
| | (2) | 0 | 0 | 0 | 0 | 0 | 20 | 20 | 0 |

| curing rate (min) | | | | | | | | | |
|---|---|---|---|---|---|---|---|---|---|
| A | | 18 | 24 | 42 | -- | -- | -- | -- | 7 |
| B (60°C) | | 10.0 | 11.8 | 17.0 | 11.8 | -- | 20.7 | -- | -- |
| B (100°C) | | -- | 2.3 | 2.6 | 1.8 | -- | 3.4 | -- | -- |
| B (150°C) | | -- | 0.5 | 0.8 | 0.5 | 0.7 | 0.7 | 1.4 | -- |
| C = Comparative Example [note] epoxy resin (1): bisphenol-F type epoxy resin (product of Asahidenka, EP-4901) monothiol compound (1): 2-ethylhexyl mercapto propionate curing agent for epoxy (1): polythiol type (product of Asahidenka, EH-317) amine catalyst (1): tert amine (product of Asahidenka, EHC-30) absorbent or adsorbent (1): 4A synthetic zeolite powder (2): activated carbon powder | | | | | | | | | |

### Examples 8 to 13 and Comparative Examples 2, 3

Examples 1 to 7 were repeated but components and proportions were modified to those shown in Table 2.

Flexibility is evaluated by tensile strength, elongation, tensile module and glass transition temperature determined by DSC method.

**Table 2**

| | | Examples | | | | | | C | |
|---|---|---|---|---|---|---|---|---|---|
| | | 8 | 9 | 10 | 11 | 12 | 13 | 2 | 3 |
| epoxy resin | (1) | 100 | 100 | 100 | 0 | 0 | 0 | 100 | 0 |
| | (2) | 0 | 0 | 0 | 100 | 100 | 100 | 0 | 100 |
| monothiol compound | (1) | 30 | 0 | 0 | 30 | 30 | 30 | 0 | 0 |
| | (2) | 0 | 20 | 0 | 0 | 0 | 0 | 0 | 0 |
| | (3) | 0 | 0 | 0 | 0 | 15 | 0 | 0 | 0 |
| | (4) | 0 | 0 | 22 | 0 | 0 | 22 | 0 | 0 |
| curing agent for epoxy | (1) | 45 | 0 | 0 | 45 | 0 | 0 | 60 | 60 |
| | (2) | 0 | 38 | 0 | 0 | 38 | 0 | 0 | 0 |
| | (3) | 0 | 0 | 30 | 0 | 0 | 30 | 0 | 0 |
| amine catalyst | (1) | 5 | 5 | 5 | 0 | 0 | 0 | 0 | 5 |
| | (2) | 0 | 0 | 0 | 0 | 0 | 0 | 5 | 0 |
| | (3) | 0 | 0 | 0 | 5 | 5 | 5 | 0 | 0 |
| absorbent or adsorbent (1) | | 45 | 45 | 45 | 0 | 0 | 0 | 0 | 0 |
| tensile strength (kgf/cm²) | | 120 | 203 | 140 | 110 | 158 | 110 | 608 | 656 |
| elongation (%) | | 10 | 9 | 3 | 9 | 8 | 3 | 8.8 | 5.6 |
| tensile module (tf/cm²) | | 2.0 | 2.2 | 4.3 | 1.9 | 1.9 | 3 | 17 | 18 |
| glass temperature (°C) | | 14.0 | 29.4 | 33.1 | 18.2 | 30.0 | 35.4 | 45.4 | 46.2 |
| C = Comparative Example [note] epoxy resin (1) : = same as Table 1 (2) : bisphenol-A type epoxy resin (product of Asahidenka, EP-4100) monothiol compound (1) : = same as Example 1 (2) : octylmercaptan (3) : benzyl mercaptan (4) : mercaptobutyl propyonate curing agent for epoxy (1) : = same as Example 1 (2) : polyamide-amine type (product of Asahidenka, EH-351) (3) : denatured aliphatic amine type (product of Asahidenka, EH-253) amine catalyst (1) : = same as Example 1 (2) : tert amine (product of Rhom & Hass, DMP-20) (3) : N, N'-dimethylaminomethylphenol absorbent or adsorbent (1) : = same as Table 1 (2) : = same as Table 1 | | | | | | | | | |

Following comparative data show tensile strength, elongation, tensile module and glass transition temperature (Tg) of resin compositions (A), (B) and (C) which are used in the above-mentioned Examples or following Examples but are not the compositions according to the present invention.

### Composition (A):

Epoxy resin (1)(bisphenol-F type epoxy resin, Asahidenka, EP-4901)/curing agent for epoxy (1)(polythiol type, Asahidenka, EH-317)/amine catalyst (1)(tert-amine, Asahidenka, EHC-30)
- tensile strength: : 630 kgf/cm²
- elongation: : 3.2 %
- tensile module: : 10,000 kgf/cm²
- Tg: : 46.0 °C

### Composition (B):

Epoxy resin (2)(bisphenol-A type epoxy resin, Asahidenka, EP-4100)/curing agent for epoxy (2)(polyamide-amine type, Asahidenka, EH-351)/amine catalyst (1)(tert-amine, Asahidenka, EHC-30)
- tensile strength: : 506 kgf/cm²
- elongation: : 1.8 %
- tensile module: : 384,000 kgf/cm²
- Tg: : 48.7°C

### Composition (C):

Epoxy resin (2)(bisphenol-A type epoxy resin, Asahidenka, EP-4100)/curing agent for epoxy (3)(denatured aliphatic amine type, Asahidenka, EH-253)/amine catalyst (1)(tert-amine, Asahidenka, EHC-30)
- tensile strength: : 528 kgf/cm²
- elongation: : 1.5 %
- tensile module: : 170,000 kgf/cm²
- Tg: : 41.4 °C

### Examples 14 to 19

Examples 8 to 13 were repeated but components and proportions were modified to those shown in Table 3 by using following components:

| | | |
|---|---|---|
| epoxy resin | (1) : | = same as Table 1 |
| | (2) : | = same as Table 2 |
| monothiol compound | (1) : | = same as Table 1 |
| | (2) : | = same as Table 2 |
| | (3) : | = same as Table 2 |
| | (4) : | = same as Table 2 |
| curing agent for epoxy | (1) : | = same as Table 1 |
| | (2) : | = same as Table 2 |
| | (3) : | = same as Table 2 |
| amine catalyst | (1) : | = same as Table 1 |
| | (2) : | = same as Table 2 |
| absorbent or adsorbent | (2) : | = same as Table 1 |

Flexibility is evaluated by tensile strength, elongation, tensile module and glass transition temperature determined by the same method as Examples 8 to 13.

**Table 3**

| | | Examples | | | | | |
|---|---|---|---|---|---|---|---|
| | | 14 | 15 | 16 | 17 | 18 | 19 |
| epoxy resin | (1) | 100 | 100 | 100 | 0 | 0 | 0 |
| | (2) | 0 | 0 | 0 | 100 | 100 | 100 |
| monothiol compound | (1) | 30 | 30 | 30 | 0 | 30 | 30 |
| | (2) | 0 | 0 | 0 | 20 | 0 | 0 |
| | (3) | 0 | 0 | 0 | 0 | 15 | 0 |
| | (4) | 0 | 0 | 0 | 0 | 0 | 22 |
| curing agent for epoxy | (1) | 45 | 0 | 0 | 45 | 0 | 0 |
| | (2) | 0 | 38 | 0 | 0 | 38 | 0 |
| | (3) | 0 | 0 | 30 | 0 | 0 | 30 |
| amine catalyst | (1) | 0 | 0 | 0 | 5 | 5 | 5 |
| | (2) | 5 | 5 | 5 | 0 | 0 | 0 |
| absorbent or adsorbent (2) | | 0 | 0 | 0 | 20 | 20 | 20 |
| tensile strength (kgf/cm²) | | 55 | 153 | 170 | 168 | 112 | 105 |
| elongation (%) | | 225 | 24.1 | 6.1 | 175 | 5.3 | 3.2 |
| tensile module (tf/cm²) | | 16.9 | 637 | 2814 | 2014 | 2758 | 3011 |
| glass temperature (°C) | | 12.9 | 23.4 | 26.9 | 18.0 | 30.0 | 38.7 |

### Examples 20 to 25 and Comparative Examples 4, 5

Examples 1 to 7 were repeated but components and proportions were modified to those shown in Table 4.

Each composition was molded into a sample plate from which water absorbability was evaluated by Japanese Norm JIS K7209 (absorption in water at 23 °C and absorption in boiled water). Water absorption was defined as weight change per unit area (mg/cm²). In the Table 4, the water absorption "A" is a value measured after a dried sample is immersed in boiled water for 30 minutes, while the water absorption "B" is a value measured after a dried sample is immersed in deionized water at 23 °C for 24 hours.

From Table 4, improvement in water absorption of epoxy resins containing absorbent is apparent. Table 4 reveals also that epoxy resins having higher flexibility show higher water absorption.

Low water absorption of Example 25 was very poor because this composition fused in the test.

**Table 4**

| | | Examples | | | | | | C | |
|---|---|---|---|---|---|---|---|---|---|
| | | 20 | 21 | 22 | 23 | 24 | 25 | 4 | 5 |
| epoxy resin (1) | | 100 | 100 | 100 | 100 | 100 | 100 | 100 | 100 |
| curing agent for epoxy (1) | | 45 | 45 | 45 | 45 | 45 | 45 | 60 | 60 |
| monothiol compound (1) | | 30 | 30 | 30 | 30 | 30 | 30 | 0 | 0 |
| amine catalyst (1) | | 5 | 5 | 5 | 5 | 5 | 5 | 5 | 5 |
| absorbent or adsorbent | (1) | 45 | 120 | 0 | 0 | 0 | 0 | 0 | 45 |
| | (2) | 0 | 0 | 20 | 0 | 0 | 0 | 0 | 0 |
| | (3) | 0 | 0 | 0 | 20 | 0 | 0 | 0 | 0 |
| | (4) | 0 | 0 | 0 | 0 | 20 | 0 | 0 | 0 |
| | (5) | 0 | 0 | 0 | 0 | 0 | 20 | 0 | 0 |

| water absorption | | | | | | | | | |
|---|---|---|---|---|---|---|---|---|---|
| A (mg/cm²) | | 6.54 | 11.4 | 3.65 | 4.50 | 4.26 | >63 | 2.49 | 3.35 |
| B (mg/cm²) | | 2.19 | 4.35 | 0.92 | 1.30 | 1.19 | --- | 0.38 | 0.82 |
| C = Comparative Example [note] epoxy resin(1) : = same as Table 1 curing agent for epoxy (1) : = same as Table 1 amine catalyst (1) : = same as Table 1 monothiol compound (1) : = same as Table 1 absorbent or adsorbent (1) : = same as Table 1 (2) : = same as Table 1 (3) : silica gel powder (4) : activated alumina powder (5) : water absorption polymer | | | | | | | | | |

### Industrial applicability

Epoxy resin composition containing monothiol compound according to the present invention permits to produce a cured product having desired flexibility and possessing further, when absorbent or adsorbent is incorporated, absorption-desorption function, deodorant function, controlled releasing function and adsorption-desorption function. The composition according to the present invention is useful applications including coating materials, sealants and adhesives

## Claims

1. A curable epoxy resin composition for producing hardened product having flexibility, comprising
a) epoxy resin (A),
b) monothiol compound (B) having one mercapto group,
c) curing agent (C) for said epoxy resin, selected from the group consisting of of amine compound (C-1) and its denatured products (C-2) and polythiol compound (C-3), and optionally
d) catalyst (D) for accelerating a reaction between epoxy group and mercapto group, which is used optionally when said amine compound (C-1) or its denatured products (C-2) is not used as said curing agent (C).

2. The composition set forth in claim 1 wherein activated hydrogen contained in said monothiol compound (B) and in said curing agent (C) is 0.01 to 0.8 equivalent and 0.2 to 2.0 equivalent respectively to one epoxy group in said epoxy resin A.

3. The composition set forth in claim 1 wherein activated hydrogen contained in said monothiol compound (B) and in said curing agent (C) is 0.1 to 0.5 equivalent and 0.5 to 1.5 equivalent respectively to one epoxy group in said epoxy resin A.

4. The composition set forth in any one of claims 1 to 3 wherein said monothiol compound (B) having one mercapto group is at least one member selected from the group consisting of
(B-1) ester between organic carboxylic acid (B-1-1) having one mercapto group and monohydroxyl compound (B-1-2),
(B-2) ester between hydroxyl compound (B-2-1) having one mercapto group and an monocarboxylic acid (B-2-2),
(B-3) monothiol compound obtained by a reaction between monoepoxy compound (B-3-1) and hydrogen sulfide or dimercaptan (B-3-2),
(B-4) monothiol compound obtained by a reaction between monohydroxyl compound (B-4-1) and epichlorohydrin (B-4-2), and
(B-5) monothiol compound selected from monothiol compound represented by the general formula : R-SH (in which R is substituted or unsubstituted alkyl, alkenyl or aryl group) the group

5. The composition set forth in any one of claims 1 to 4 further containing absorbent or adsorbent (E).

6. The composition set forth in claim 5 wherein a proportion of said absorbent or adsorbent (E) is 10 to 200 parts by weight with respect to 100 parts by weight of said epoxy resin (A).

7. The composition set forth in claim 5 or 6 wherein said absorbent or adsorbent (E) is a member selected from the group consisting of activated carbon, activated alumina, zeolite, silica gel.and high polymer absorbent.

8. The composition set forth in claim 5 or 6 wherein said absorbent or adsorbent (E) is activated carbon an/or zeolite.

9. The composition set forth in any one of claims 5 to 8 wherein said curing agent (C) is polythiol compound (C-3).

10. The composition set forth in any one of claims 5 to 8 wherein said curing agent (C) for epoxy resin is a polythiol compound selected from the group consisting of
(C-3-1) ester between organic carboxylic acid (C-3-1-1) having at least one mercapto group and polyhydroxyl compound (C-3-1-2),
(C-3-2) ester between hydroxyl compound (C-3-2-1) having more than one mercapto group and polycarboxylic acid (C-3-2-2),
(C-3-3) polythiol compound obtained by a reaction between polyepoxy compound (C-3-3-1) and hydrogen sulfide or polythiol (C-3-3-2),
(C-3-4) polythiol compound obtained by a reaction between polyhydroxyl compound (C-3-4-1) and epichlorohydrin, and
(C-3-5) other polythiol compounds.
